# EUROPÄISCHE PATENTSCHRIFT

(11) **EP 2 381 388 B1**
(45) Veröffentlichungstag und Bekanntmachung des Hinweises auf die Patenterteilung: **02.07.2014**
(21) Anmeldenummer: 11000319.1
(22) Anmeldetag: 17.01.2011
(51) Int. Cl.: G06K 7/00

(54) **Chipkarten-Verbindungsstecker**
Smart-card-connector
Connecteur de cartes intelligentes

(30) Priorität: 20.04.2010 DE 102010015527
(43) Veröffentlichungstag der Anmeldung: 26.10.2011
(73) Patentinhaber: Amphenol-Tuchel Electronics GmbH, 74080 Heilbronn (DE)
(72) Erfinder: Rau, Michael, 74177 Bad Friedrichshall (DE); Schnell, Thomas, 74078 Heilbronn (DE)
(74) Vertreter: Wendels, Stefan

(56) Entgegenhaltungen:
- EP-A2- 2 159 738

## Beschreibung

Die Erfindung bezieht sich auf einen Smart-Card-Connector, insbesondere für einen Smart-Card-Connector für SIM-Karten.

Smart-Card-Connectoren gemäß der vorliegenden Erfindung verstehen sich als Kartenlesevorrichtungen oder Kartenkontaktiervorrichtungen, welche geeignet sind für kleine SIM-Karten der Größe ca. 25mm x 17mm, sowie für Karten, welche in ungefähr der vergleichbaren vorgenannten Kartengröße liegen, sowie für kleinere Karten.

Aus der EP 2 159 738 A2 ist ein gattungsgemäßer Smart-Card-Connector für eine SIM-Karte bekannt, welcher im Kontaktträger ein gestanztes Kontaktgitter aufweist, welches an mehreren Stellen zumindest teilweise aus dem Kontaktträger so herausragen, dass sich daran ein Deckel befestigen lässt.

Darüber hinaus gibt es Micro-SD-Karten und kleinere Micro-Karten, die ebenfalls bedingt durch ihre kleine Kartengröße einen miniaturisierten Kartenleser benötigen.

Smart-Card-Connectoren, insbesondere auch für SIM-Karten sind in zahlreichen Ausführungsformen bekannt geworden.

Smart-Card-Connectoren bestehen typischerweise aus einem Kontaktträger, der eine Auflagefläche für eine Smart-Card, im folgenden auch Karte genannt, bildet.

Wenn eine Smart-Card in den Smart-Card-Connector eingesetzt ist, so liegt die Karte auf dieser Auflagefläche oder unmittelbar zu ihr beabstandet in ihrer so genannten Lese- oder Kontaktierungsposition, wo gleichzeitig im allgemeinen im Kontaktträger vorhandene Kontaktelemente mit den Kontaktzonen der Smart-Card in Kontaktberührung stehen. Häufig wird am Kontaktträger ein Deckel angebracht, der dazu dient, die Smart-Card in Richtung auf die Kontaktelemente hin zu drücken und in ihrer Leseposition zu halten.

Dabei ist zu unterscheiden, zwischen Smart-Card-Lesern, bei dem sich der Deckel schwenkbar am Kartenträger gelagert befindet und den Smart-Card-Connectoren, bei denen der Deckel fest am Kontaktträger montiert ist und sich dadurch ein Aufnahmeschlitz für die zu lesende Smart-Card ergibt.

Die vorliegende Erfindung befasst sich lediglich mit Smart-Card-Connectoren für kleine Karten, insbesondere kleine SIM-Karten der zuletzt genannten Bauart, bei dem der Deckel fest am Kontaktträger montiert ist unter Bildung eines entsprechenden Aufnahmeschlitzes für eine Karte.

Bei kleinen Kartenlesern besteht zunehmend das allgemeine Ziel weiterer Miniaturisierung. Damit besteht die Anforderung einen in der Höhe und Abmessung minimalen Smart-Card-Connector für kleine Karten bereit zu stellen.

Ungeachtet dessen, dass bei Kartenlesern größerer Kartenformate im allgemeinen auch eine Entwicklung hin zu kleinen Bauformen besteht, so bringt bei besonders kleinen Kartenformaten die Kleinheit besondere für diese Typen von Kartenlesern eigene Probleme und Anforderungen mit sich.

Im Stand der Technik sind Smart-Card-Connectoren bekannt, bei dem im Kontaktträger mehrere zueinander beabstandete Kontaktelemente zur Kontaktierung der Smart-Karte vorgesehen sind und am Kontaktträger Deckelverrastmittel vorgesehen sind, an denen ein Kunststoff- oder Metalldeckel angebracht wird.

Problematisch ist dabei, dass die Deckelverrastmittel des Kontaktträgers oder die Gegenrastmittel des Deckels so beschaffen sind, dass diese mit ausreichender Stabilität ausgebildet sein müssen, um die notwendige mechanische Festigkeit aufzuweisen.

Teilweise greift dazu der Deckel, vorzugsweise bei Verwendung eines Metalldeckels mit Haltebügeln, komplett unter den Kontaktträger, womit sich eine solche Konstruktion nachteilig auf die Bauhöhe auswirkt.

Bedingt durch technische Grenzen in der Fertigung und erzielbare, maximale Dünnheit bei noch ausreichender Stabilität von Bauteilen und Bauteilträgern steht der Konstrukteur eines Smart-Card-Connectors für SIM-Karten und kleinere Karten vor dem Problem, vorhandene Abmessungen weiter zu reduzieren und insbesondere die Bauhöhe zu verkleinern.

Die vorliegende Erfindung beschäftigt sich damit, einen besonders kleinen in den Abmessungen kompakt gebauten Smart-Card-Connector bereit zu stellen.

Somit ist die Aufgabe der vorliegenden Erfindung einen Smart-Card-Connector derart bereit zu stellen, der über eine minimale Bauhöhe und einen minimalen Bauraum verfügt, bei ausreichender mechanischer Stabilität und einfacher Herstellbarkeit.

Die Erfindung wird dadurch gelöst, dass ein Smart-Card-Connector bereitgestellt wird der in dem isolierenden Kunststoffkontaktträger über metallische, vorzugsweise aus einem Metallband gestanzte Befestigungsmittel verfügt, die so aus dem Kontaktträger herausragen, dass sich daran ein Metalldeckel, vorzugsweise mittels einem Fügeverfahren (Schweiß- oder herkömmlichen Verbindungsverfahren) verbinden lässt.

In einem bevorzugten Verfahren werden die Befestigungsmittel für den Deckel gemeinsam mit den Kontakten (Lesekontakten) aus einem Metallband herausgestanzt, so dass der bisher die Kontakte umgebene und notwendigerweise angefallene Stanzabfall eingespart werden kann und gleichzeitig die aus dem Metallband heraus gestanzten Deckelverrastmittel bereitgestellt werden.

Mit Vorteil werden die Deckelverrastmittel und die Lesekontakte so aus dem Metallband heraus gestanzt, dass ein in der Außenkontur nahezu der Größe des Smart-Card-Lesers entsprechende Außenkontur durch das Stanzelement ausgebildet wird.

Durch die zuvor beschriebene Konstruktion des Einbettens eines Stanzbauteils (Stanzgitter) wird ein besonders stabiler Smart-Card-Connector erzielt, der bedingt durch die Abmessungen der Deckelverrastmittel neben dem Bereitstellen der Verbindungsfunktion zum Metalldeckel auch eine mechanische Stützfunktion im-Kontaktträger übernimmt.

Erfindungsgemäß wird hierzu ein Stanzbauteil (Stanzgitter)aus mehreren Stanzelementabschnitten hergestellt, welches sowohl Befestigungsabschnitte oder Aufstützabschnitte für den Smart-Card-Connector auf einer Leiterplatte zur Verfügung stellt, als auch gleichzeitig Befestigungsabschnitte für den Deckel bereitstellt.

Das Stanzbauteil wird mechanisch im Kontaktträger eingebettet, so dass das Stanzbauteilauf einer Seite mittels einer Kontaktträgeroberseite und auf der gegenüberliegenden Seite mittels eines Kontaktträgerbodens umschlossen ist.

Im Bereich des Stanzbauteils befindet sich mit Vorzug mehrere Löcher, in welche sich der Kontaktträger mechanisch verankern kann, wodurch eine besonders gute Stabilität und Verbindungseigenschaften zwischen dem Kontaktträger und dem Stanzbauteil erzeugt werden kann.

Mit Vorteil kann das Stanzbauteil in ein erstes und zweites Stanzelement aufgeteilt werden, welche über einen Befestigungsabschnitt oder einen Verbindungssteg miteinander verbunden bleiben. Hierdurch können Spannungen, die durch den Stanz- und Biegeprozess des Stanzbauteils entstehen, gezielt entfernt werden und in folge des Verbindungssteges eine mechanische Gesamtfestigkeit des Smart-Card-Connectors erzielt werden.

Zur Lösung der der Erfindung zu Grunde liegenden Aufgabe sieht die Erfindung einen Smart-Card-Connector vor, der in den Ansprüchen definiert und in der Beschreibung gekennzeichnet und beschrieben ist.

Weitere Vorteile, Ziele und Einzelheiten der Erfindung ergeben sich aus der Beschreibung von Ausführungsbeispielen anhand der Zeichnung. In der Zeichnung zeigt:
Fig. 1 eine perspektivische Ansicht eines Ausführungsbeispiels eines Smart-Card-Connectors in der Form eines SIM-Card-Connectors;
Fig. 2 eine perspektivische Ansicht eines Smart-Card-Connectors gemäß Fig. 1 von unten;
Fig. 3 eine perspektivische Ansicht des Stanzbauteils, welches in Fig. 1 und Fig. 2 innerhalb des Kontaktträgers eingebettet ist.

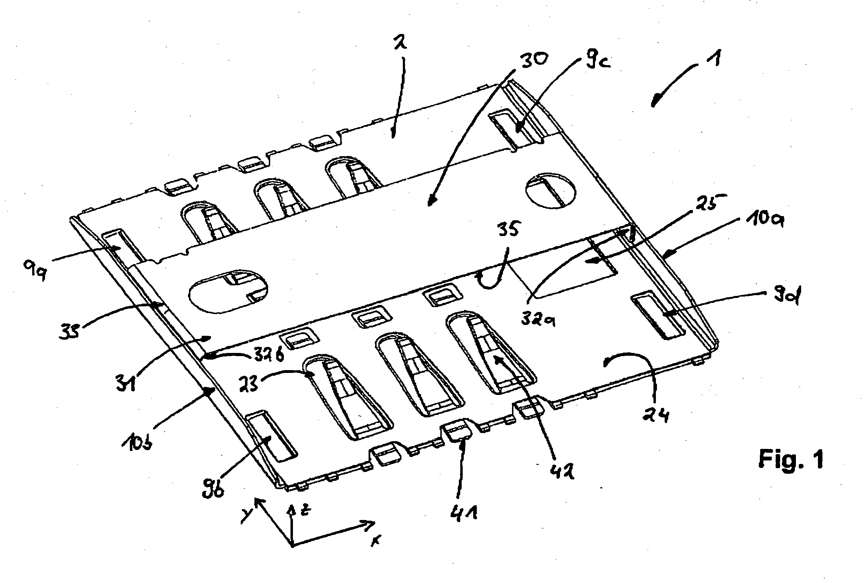

In Fig. 1 ist ein Smart-Card-Connector 1 gezeigt. Der Smart-Card-Connector 1 umfasst im wesentlichen den Kontaktträger 2, den Deckel 30 und das Stanzbauteil 3, welche im folgenden anhand der Fig. 1 bis Fig. 3 beschrieben werden.

### Das Stanzbauteil 3

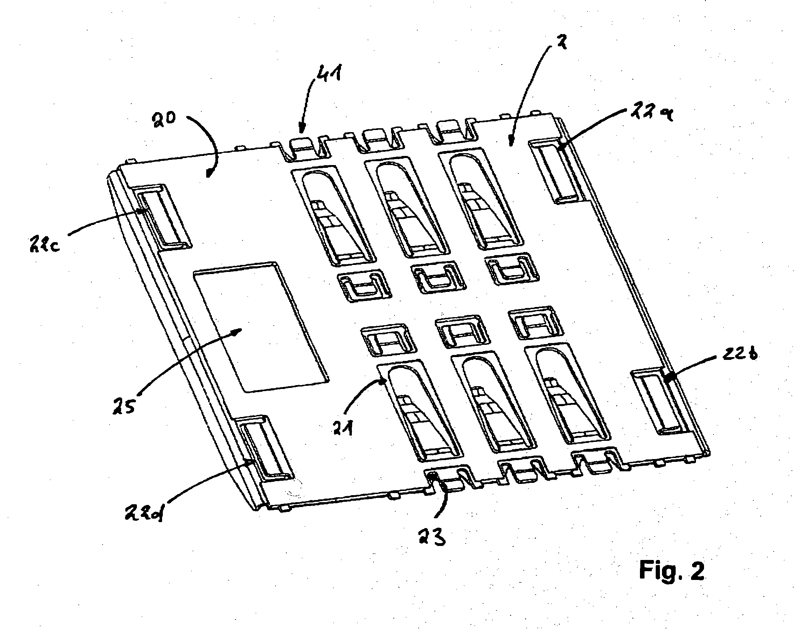

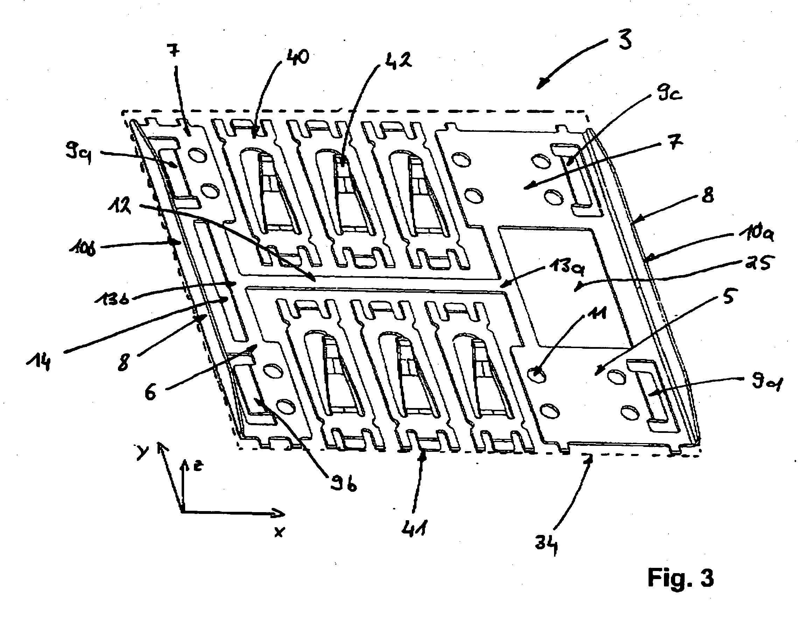

Wie in Fig. 1 und Fig. 2 teilweise ersichtlich und in Fig. 3 isoliert vom Kontaktträger 2 dargestellt, ist das erfindungsgemäße Stanzbauteil 3.

Das Stanzbauteil 3 erstreckt sich im wesentlichen in der dort dargestellten xy-Ebene, welche die xy-Fläche aufspannt. Senkrecht zur xy-Ebene ist die z-Achse dargestellt.

Das Stanzbauteil 3 umfasst, wie in der Fig. 3 ersichtllch, sechs Kontakte 40, welche über Kontaktanschlüsse 41 und Kontaktfederarme 42 verfügen. Das Stanzbauteil 3 ist mit Vorteil aus einem Metallstreifenherausgestanzt. Das Stanzbauteil 3 verfügt neben den Kontakten 40 über ein Stanzelement 5 und ein dazu beabstandetes mit einem Verbindungssteg 12 verbundenes Stanzelement 6. Die Kontakte 40 sowie das Stanzelement 5 und das Stanzelement 6 sind so zueinander in der xy-Ebene angeordnet, dass diese eine rechteckige Außenkontur 34 bilden. Das Stanzbauteil 3 kann dabei aus jedem geeigneten metallischen Material mit einer auf die Anwendung abgestimmten Eigenschaft hergestellt werden. Geeignete Metallliegierungenkönnen Insbesondere in Abhängigkeit der Federeigenschaften der Kontakte 40 abgestimmt sein.

Das Stanzelement 5 und das Stanzelement 6 verfügen über einen in der xy-Ebene gelegenen Stanzelementabschnitt7 und einem dazu senkrechten, zu der xy-Ebene auskragenden Stanzelementabschnitt 8. Der Stanzelementabschnitt 7 des Stanzelementes 5 kann über einen Verbindungssteg 12 mit dem Stanzelementabschnitt 8 des Stanzelementes 6 einstückig ausgebildet sein.

Mit Vorteil verläuft der Verbindungssteg 12 zwischen je drei der zueinander beabstandeten Kontakte 40. Der Verbindungssteg 12 ist an den Verbindungsstellen 13a, 13b mit je einem Stanzelement 5, 6 materialschlüssig verbunden. Die Stanzelementabschnitte 8 verlaufen entlang der y-Richtung als Befestigungsabschnitte 10a, 10b entlang der Stanzelemente 5, 6. Diese sind vorzugsweise als senkrecht aus der xy-Ebene gebildete Auskragungen 10a, 10b so ausgebildet, dass sich daran der Metalldeckel30 mittels eines geeigneten Fügeverfahrensverbinden lässt.

Die Stanzelementabschnitte 8 verlaufen entlang der y-Richtung als Befestigungsabschnitte 10a, 10b entlang der Stanzelemente 5, 6. Diese sind vorzugsweise als senkrecht aus der xy-Ebene gebildete Auskragungen 10a, 10b so ausgebildet, dass sich daran der Metalldeckel 30 mittels eines geeigneten Fügeverfahrens verbinden lässt.

In dem Kontaktträger 2 eingebrachten Stanzbauteil 3, wie in Fig. 1 und Fig. 2 ersichtlich, kragen die Befestigungsabschnitte 10a, 10b aus dem Kontaktträger 2 seitlich und nach oben heraus, so dass diese frei zugänglich zur Verbindung des Metalldeckels 30 angeordnet sind. Die Stanzelemente 5, 6 verfügen in ihren Stanzelementabschnitten 7, 8 über Befestigungsabschnitte 9a, 9b, 9c, 9d, welche mit Vorteil aus der, wie in Fig. 1 bezeichneten, xy-Ebene leicht nach unten aus dem Kontaktträger 2 heraus ragende Auskragungen ausgebildet sind.

Hierdurch lässt sich durch gezielte Anstellwinkel der Befestigungsabschnitte 9a, 9b, 9c, 9d zur xy-Ebene auf der Kontaktträgerunterseite, somit unterhalb des Kontaktträgerbodens 20, eine Auflagefläche aufspannen.

Mit Vorteil werden im Stanzelementabschnitt 6, 7 Löcher 11 und/oder Ausnehmungen 14 vorgesehen, die Aufnahmeraum für den das Stanzbauteil 3 umgebenden Kontaktträger 2 bilden, der sich mit seinem Isolationsmaterial in diesen Löchern 11 und Ausnehmungen 14 mechanisch festhält.

Vorzugsweise im Spritz-Guss-Verfahren hergestellte Smart-Card-Connectoren können dadurch besonders stabil hergestellt werden, da der flüssige Kunststoff in die Löcher 11 und Ausnehmungen 14 hineinfließt und sich nach dem Aushärten mechanisch darin bzw. damit verbindet.

### Der Kontaktträger 2

Der Kontaktträger 2 umschließt das Stanzbauteil 3 im wesentlichen mit seinem Kontaktträgerboden 20 und seiner Kontaktträgeroberseite 24 jeweils in der xy-Ebene derart, dass neben den Kontakten 40 lediglich die Befestigungsabschnitte 9a, 9b, 9c, 9d sowie die Befestigungsabschnitte 10a, 10b aus dem Kontaktträger heraus ragen.

Daneben ragen die Kontaktanschlüsse 41 und Kontaktfederarme 42 aus den Ausnehmungen 23 des Kontaktträgers 2 heraus.

Mit Vorteil verfügt der Kontaktträger 2 über sechs, als Fenster ausgebildete Ausnehmungen 21, in denen die Kontakte 40 mit ihren Kontaktfederarmen 42 angeordnet sind.

Dabei wird jeder Kontakt 40 durch mindestens einen Abschnitt des Kontaktträgerbodens 20 auf deren Unterseite und mindestens einen Abschnitt der Kontaktträgeroberseite 24 auf deren Oberseite durch Materialschluss des Kontaktträgers 2 umschlossen. Der Kontaktträger 2 kann dabei aus jedem geeigneten Kunststoffmaterial, vorzugsweise aus spritz-guss-fähigem Kunststoff hergestellt sein.

An den Positionen, an denen sich die Auskragungen 9a, 9b, 9c, 9d des Stanzbauteils 3 befinden, verfügt der Kontaktträger 2 über Ausnehmungen 22a, 22b, 22c, 22d, aus denen die zuvor genannten Befestigungsabschnitte heraus ragen. Des weiteren kann der Kontaktträger 2 über Ausnehmungen 23 für die Kontaktanschlüsse 41 verfügen.

Mit Vorteil ist im Bereich des Kontaktträgers 2 ein Fenster 25 zur Aufnahme weiterer Bauteile vorgesehen. Selbsterklärend ist dabei, dass sich in diesem Falle im Bereich des Stanzbauteils 3 ein zumindest nahezu identisches Fenster 25 befanden muss.

### Der Metalldeckel 30

Der Metalldeckel 30 ist deutlich in Fig. 1 ersichtlich und dort als Bügel 31 ausgebildet. Der Bügel 31 hat mit Vorteil eine Breite von etwa 20% bis 40% der Breite des Kontaktträgers 2. Die Breite bezeichnet hierbei die kürzere Seitenkantenlänge des Kontaktträgers 2 in y-Richtung. Hierdurch kann in besonders einfacher Weise ein Aufnahmeraum zwischen der Kontaktträgeroberseite 24 und der Deckelunterseite 35 hergestellt werden, in welche eine Karte einfach einzuführen ist. Mit zunehmender Deckelbreite wird die Einführung einer Karte in den Kartenleser oder den zwischen dem Metalldeckel 30 und dem Kontaktträger 2 aufgespannten Kartenaufnahmeraum erschwert.

Der Bügel 31 verfügt an seinen Längsseitenenden über Befestigungsabschnitte 32a, 32b, welche durch Umbiegungen 33 erzeugt werden. Diese Befestigungsabschnitte 32a, 32b dienen der Verbindung des Metalldeckels 30 mit den Befestigungsabschnitten 10a, 10b des Stanzbauteils 3.

In einem ersten Verfahrensschritt wird ein Stanzbauteil umfassend Kontakte 40 und Stanzelemente 5, 6 aus einem gemeinsamen Stanzblech durch Stanzbiegeprozesse in der oben näher beschriebenen Art hergestellt.

In einem zweiten Fertigungsschritt wird das so hergestellte Stanzbauteil 3 in ein Spritz-Guss-Werkzeug eingebracht und ein Kontaktträger 2 mit einem Kontaktträgerboden 20 und einer Kontaktträgeroberseite 24 um das Stanzbiegeteil 3 so angeformt, dass die am Stanzbauteil 3 vorgesehenen Befestigungsabschnitte 9a, 9b, 9c, 9d und die Befestigungsabschnitte für den Deckel 10a, 10b aus dem Kontaktträger 3 heraus ragen.

In einem weiteren Schritt wird ein Metalldeckel 30 durch ein herkömmliches Fügeverfahren an den Befestigungsabschnitten 10a, 10b des Stanzbauteils 3 an geeigneten Stellen befestigt.

### Bezugszeichenliste

### Smart-Card-Connector

- 1: Smart-Card-Connector
- 2: Kontaktträger
- 3: Stanzbauteil
- 4: Lesekontakte (gestanzte Kontakte)
- 5: Stanzelement
- 6: Stanzelement
- 7: Stanzelementabschnitt
- 8: Stanzelementabschnitt
- 9a, 9b,9c, 9d: Befestigungsabschnitte für Smart-Card-Connector
- 10, 10b: Befestigungsabschnitte für Deckel (Auskragungen)
- 11: Löcher
- 12: Verbindungssteg
- 13a.13b: Verbindungsbereiche
- 14: Ausnehmungen

- 20: Kontaktträgerboden
- 21: als Fenster ausgebildete Ausnehmungen
- 22a, 22b, 22c, 22d: Ausnehmungen
- 23: Ausnehmungen
- 24: Kontaktträgeroberseite
- 25: Fenster

- 30: Metalldeckel
- 31: Bügel
- 32a, 32b: Befestigungsabschnitte
- 33: Umbiegungen
- 34: Außenkontur
- 35: Deckelunterseite

- 40: Kontakte
- 41: Kontaktanschlüsse
- 42: Kontaktfederarme

## Patentansprüche

1. Smart-Card-Connector (1) für eine SIM-Karte umfassend einen Kontaktträger (2) sowie gestanzte Kontakte (40), wobei im Kontaktträger (2) ein metallisches Stanzbauteil (3) so eingebracht ist, dass der Kontaktträger (2) dieses zumindest teilweise aufnimmt und umschließt und das Stanzbauteil (3) über wenigstens einen ersten Befestigungsabschnitt (10a, 10b) verfügt, der aus dem Kontaktträger (2) zur Befestigung eines Deckels (30) herausragt, **dadurch gekennzeichnet, dass** das Stanzbauteil (3) über weitere Befestigungsabschnitte (9a, 9b, 9c, 9d) verfügt, die so am Stanzbauteil (3) angeordnet sind, dass diese aus dem Kontaktträgerboden (20) des Kontaktträgers (2) heraus ragen.

2. Smart-Card-Connector (1) gemäß Anspruch 1, **dadurch gekennzeichnet, dass** der Kontaktträger (2) einen Kontaktträgerboden (20) und eine Kontaktträgeroberseite (24) aufweist, zwischen denen sich das Stanzbauteil (3) mit seinen Stanzelementen (5, 6) befindet, die jeweils über Stanzelementabschnitte (7) verfügen und der mechanischen Fixierung des Stanzbauteils (3) im Kontaktträger (2) dienen.

3. Smart-Card-Connector (1) gemäß Anspruch 1 oder 2, **dadurch gekennzeichnet, dass** das Stanzbauteil (3) wenigstens zwei zueinander beabstandete Stanzelemente (5, 6) innerhalb des Kontaktträgers (2) aufweist.

4. Smart-Card-Connector (1) gemäß Anspruch 2 oder 3, **dadurch gekennzeichnet, dass** der oder die ersten Befestigungsabschnitte (10a, 10b) sich so an die Stanzelement (7) anschließen, dass diese aus dem Kontaktträger (2) herausragen, derart, dass daran ein Deckel (30) befestigt werden kann.

5. Smart-Card-Connector (1) gemäß Anspruch 4, **dadurch gekennzeichnet,**
**dass** an jedem der Stanzelemente (5, 6) je ein erster Befestigungsabschnitt (10a, 10b) vorgesehen ist zur Befestigung eines Deckels (30).

6. Smart-Card-Connector (1) gemäß einem der vorhergehenden Ansprüche,
**dadurch gekennzeichnet, dass** sich die weiteren Befestigungsabschnitte (9a, 9b, 9c, 9d) im Bereich von im Kontaktträger (2) ausgebildeten Ausnehmungen (22a, 22b, 22c, 22d) befinden.

7. Smart-Card-Connector (1) gemäß einem der Ansprüche 3 bis 6, **dadurch gekennzeichnet, dass** die Stanzelemente (5, 6) mittels eines Verbindungssteges (12) miteinander verbunden sind.

8. Smart-Card-Connector (1) gemäß einem der vorhergehenden Ansprüche,
**dadurch gekennzeichnet, dass** im Stanzbauteil (3) mehrere Löcher (11) innerhalb des Kontaktträgers (2) angeordnet sind.

9. Smart-Card-Connector (1) gemäß einem der vorhergehenden Ansprüche,
**dadurch gekennzeichnet, dass** im Kontaktträger (2) und im Stanzbauteil (3) ein Fenster (25) so vorgesehen ist, dass sich darin innerhalb des Kontaktträgers ein Bauraum für ein weiteres Bauelement ergibt.

## Claims

1. Smart card connector (1) for a SIM card comprising a contact carrier (2) and also stamped contacts (40), wherein a metal stamped component (3) is embedded in the contact carrier (2) in such a manner that the contact carrier (2) at least in part receives and encompasses said stamped component, and the stamped component (3) comprises at least one first fastening section (10a, 10b) that protrudes out of the contact carrier (2) for the purpose of fastening a cover (30), **characterized in that** the stamped component (3) comprises further fastening sections (9a, 9b, 9c, 9d) that are arranged on the stamped component (3) in such a manner that said fastening sections protrude out of the contact carrier base (20) of the contact carrier (2).

2. Smart card connector (1) in accordance with Claim 1, **characterized in that** the contact carrier (2) comprises a contact carrier base (20) and a contact carrier upper face (24) between which the stamped component (3) is located with its stamped elements (5, 6) that in each case comprise stamped element sections (7) and are used to mechanically fix the stamped component (3) in the contact carrier (2).

3. Smart card connector (1) in accordance with Claim 1 or 2, **characterized in that** the stamped component (3) comprises at least two stamped elements (5, 6) that are spaced apart from one another within the contact carrier (2).

4. Smart card connector (1) in accordance with Claim 2 or 3, **characterized in that** the fastening section or the first fastening sections (10a, 10b) connect to the stamped element (7) in such a manner that said fastening sections protrude out of the contact carrier (2) in such a manner that a cover (30) can be fastened to said contact carrier.

5. Smart card connector (1) in accordance with Claim 4, **characterized in that** a first fastening section (10a, 10b) is provided respectively on each of the stamped elements (5, 6) for the purpose of fastening a cover (30).

6. Smart card connector (1) in accordance with any one of the preceding claims, **characterized in that** the additional fastening sections (9a, 9b, 9c, 9d) are located in the region of cut-outs (22a, 22b, 22c, 22d) that are embodied in the contact carrier (2).

7. Smart card connector (1) in accordance with any one of Claims 3 to 6, **characterized in that** the stamped elements (5, 6) are connected to one another by means of a connecting piece (12).

8. Smart card connector (1) in accordance with any one of the preceding claims, **characterized in that** in the stamped component (3) multiple holes (11) are arranged within the contact carrier (2).

9. Smart card connector (1) in accordance with any one of the preceding claims, **characterized in that** a window (25) is provided in the contact carrier (2) and in the stamped component (3) in such a manner that an installation space for an additional component is achieved therein within the contact carrier.

## Revendications

1. Connecteur de carte intelligente (1) pour une carte SIM, comportant un support de contact (2) ainsi que des contacts estampés (40), un composant estampé métallique (3) étant inséré dans le support de contact (2) de telle sorte que le support de contact (2) reçoive et entoure celui-ci au moins partiellement et que le composant estampé (3) présente au moins une première portion de fixation (10a, 10b) qui fait saillie hors du support de contact (2) en vue de la fixation d'un couvercle (30), **caractérisé en ce que** le composant estampé (3) présente des portions de fixation supplémentaires (9a, 9b. 9c, 9d) qui sont disposées sur le composant estampé (3) de telle sorte que celles-ci fassent saillie hors du fond (20) du support de contact (2).

2. Connecteur de carte intelligente (1) selon la revendication 1, **caractérisé en ce que** le support de contact (2) comprend un fond de support de contact (20) et un côté supérieur de support de contact (24), entre lesquels se trouve le composant estampé (3) pourvu de ses éléments estampés (5, 6) qui présentent respectivement des portions d'élément estampé (7) et servent à la fixation mécanique du composant estampé (3) dans le support de contact (2).

3. Connecteur de carte intelligente (1) selon la revendication 1 ou 2, **caractérisé en ce que** le composant estampé (3) comprend au moins deux éléments estampés (5, 6) espacés les uns des autres à l'intérieur du support de contact (2).

4. Connecteur de carte intelligente (1) selon la revendication 2 ou 3, **caractérisé en ce que** la ou les premières portions de fixation (10a, 10b) se raccordent à l'élément estampé (7) de telle sorte que celles-ci fassent saillie hors du support de contact (2) de telle sorte qu'un couvercle (30) puisse y être fixé.

5. Connecteur de carte intelligente (1) selon la revendication 4, **caractérisé en ce qu'**il est prévu sur chacun des éléments estampés (5, 6) une première portion de fixation (10a, 10b) respective en vue de la fixation d'un couvercle (30).

6. Connecteur de carte intelligente (1) selon l'une quelconque des revendications précédentes, **caractérisé en ce que** les portions de fixation supplémentaires (9a, 9b, 9c, 9d) se trouvent dans la région d'évidements (22a, 22b, 22c, 22d) réalisés dans le support de contact (2).

7. Connecteur de carte intelligente (1) selon l'une quelconque des revendications 3 à 6, **caractérisé en ce que** les éléments estampés (5, 6) sont reliés les uns aux autres au moyen d'une nervure de liaison (12).

8. Connecteur de carte intelligente (1) selon l'une quelconque des revendications précédentes, **caractérisé en ce que** plusieurs trous (11) dans le composant estampé (3) sont disposés à l'intérieur du support de contact (2).

9. Connecteur de carte intelligente (1) selon l'une quelconque des revendications précédentes, **caractérisé en ce qu'**une ouverture (25) dans le support de contact (2) et dans le composant estampé (3) est prévue de telle sorte qu'un espace de construction pour un composant supplémentaire y soit produit à l'intérieur du support de contact.
